# EUROPEAN PATENT SPECIFICATION

(11) **EP 0 663 307 B1**
(45) Date of publication and mention of the grant of the patent: **25.11.1998**
(21) Application number: 95300193.0
(22) Date of filing: 12.01.1995
(51) Int. Cl.: B60G 11/36, F16F 1/12

(54) **An adjustable coil spring assembly**
Einstellbare Spiralfederanordnung
Ensemble de ressort hélicoidal réglable

(30) Priority: 12.01.1994 ZA 94198
(43) Date of publication of application: 19.07.1995
(73) Proprietor: Spencer, William Wilfred, Esplanade, East London (ZA)
(72) Inventor: Spencer, William Wilfred, Esplanade, East London (ZA)
(74) Representative: Skone James, Robert Edmund

(56) References cited:
- AU-D- 7 590 874
- FR-A- 1 098 875
- FR-A- 2 318 349
- US-A- 2 264 070
- US-A- 2 560 999
- US-A- 2 697 600
- MECHANICAL WORLD & ENGINEERING RECORD, vol. 131,no. 3391, February 1952 MANCHESTER (GB), pages 85-89, BERRY, W.R. 'Spring Design -IX'

## Description

### BACKGROUND TO THE INVENTION

THIS invention relates to an adjustable coil spring assembly.

There exists a need for supports for the leaf springs of vehicles that are subject to high loads, such as mini-bus taxis or trucks. Mini-bus taxis, which are often loaded to capacity, benefit markedly from such leaf spring supports in that the safety and comfort of passengers is enhanced. The wear and tear on the leaf springs of the vehicle is also minimized.

Whilst it is known to provide support for leaf springs of vehicles, the installation of such supports usually requires some degree of structural modification to the vehicle. At least one support arrangement that does not require modification to the vehicle is described in South African Patent 72/8488. However, this type of support arrangement is limited in versatility as an individual support arrangement can only be installed on a limited number of vehicle types due to the great diversity in vehicle dimensions.

In "Spring Design - IX", Mechanical World and Engineering Record, a screw-in-bung or plug is disclosed as a means for providing an attachment at the end of a helical tension spring in which the effective length of the spring may be varied by screwing the threaded plug into or out of the open end of the coil spring, whilst not unduly affecting the ability of the coils of the spring to function.

FR-A-1098875 discloses a vehicle supplementary spring assembly in which the coil spring itself terminates in integrally formed hooks rather than anchoring inserts. As a result, the overall tension in the spring is not adjustable. In addition, the hooks, which represent the terminations of the spring coils, represent a weak link in the assembly. Separate mounting clamps are provided for mounting the spring assembly to the leaf spring. This tends to inhibit the overall functioning of the leaf spring.

### SUMMARY OF THE INVENTION

According to the invention there is provided a vehicle supplementary spring assembly adapted to supplement the spring force provided by a leaf spring of the vehicle, said supplementary spring assembly comprising:
an elongate coil spring;
a first anchoring insert fitted to one end of the coil spring;
a second anchoring insert fitted to the other end of the coil spring;
a first connector member connected to the first anchoring insert and adapted to connect the supplementary spring assembly to a first reaction point on a vehicle at one end of the leaf spring; and
a second connector member connected to the other end of the coil spring and adapted to connect the supplementary spring assembly to a second reaction point on the vehicle in the region of an axle of the vehicle between the opposed ends of the leaf spring;
adjustment means for adjusting the overall length of the supplementary spring assembly so as to allow for variations in spacing between the first and second reaction points when the spring assembly is fitted to different vehicles, said first and second reaction points being selected in use such that a tensile force applied between the reaction points supplements the action of the leaf spring in supporting the vehicle and is characterized in that:
   the elongate coil spring is open-ended and forms an axially extending round cylindrical passage having a wall of helical configuration defined by the inner surface of the coils of the coil spring;
   the first and second anchoring inserts have outer surfaces with complemental helical thread-like formations thereon dimensioned to be in threaded engagement with the helical wall of the passage and adapted to be screwed into opposite ends of the coil spring, said tensile force being selectively variable by varying the position of at least one of the anchoring inserts along the length of the passage;
   the second anchoring insert is connected to the second connector member via an articulated connection for
   ensuring that the coil spring extends and retracts so as to apply the tensile force in a straight line coincident with the central axis of the coil spring.

The first insert is preferably provided with an axial bore sized to accommodate a first connector member for connecting a first end of the spring to the first or second reaction member, the first connector member being axially movable and securable within the bore so as to allow further adjustment in overall length of the coil spring assembly.

To further enhance the working of the assembly, the second insert may be provided with an axial bore sized to accommodate the second connector member, the second connector member being axially movable and securable within the bore so as to allow further adjustment in the overall length of the coil spring assembly.

The first connector member may include a hook for engaging an eye at an end of the leaf spring, and the second connector member may be securable to an axle of the vehicle. The second connector member may include a bracket upon which are mounted two hooks for engaging the axle of the vehicle.

Another aspect of the invention provides for a connection bracket which is associated with the end of the coil spring which is adjacent the axle to be configured so as to align the coil spring such that its axis intersects with the axis of the axle.

The connector member associated with the axle may comprise a bracket of elongate form adapted to be aligned generally transverse to the axis of the coil spring, said bracket having a central region which in use will be generaily perpendicular to the axis of the coil spring and two outer regions which are co-planar with each other and angled relative to the central region.

Preferably the coil spring is connected to the central region by a bolt which passes through a hole formed in a central region and screws into an anchoring insert located within the axially extending passage within the centre of the coil spring. The bolt may be connected to the bracket in an articulated manner such that the angular relationship between the bracket and the coil spring may vary as the axle moves up and down in use.

The angle of inclination between the central region and the edge regions of the bracket may be selected such that, in the assembled condition, the coil spring assembly adopts a cranked configuration with the end of the coil spring adjacent to the axle being inclined downwardly towards the leaf spring as a consequence of the said angular relationship between the central region and the outer regions of the bracket. The bracket preferably comprises a forged plate with a concave recess formed around the hole passing through the central region, said bolt having a male cup bearing fitted thereto which locates within the concave recess and allows for said articulated connection between the bolt and the bracket. This arrangement permits the coil spring to remain straight as the leaf spring on the vehicle moves up and down.

The invention also extends to arrangements wherein the axle of the vehicle is located below the leaf spring. In this arrangement a bracket which defines a reaction member associated with the axle is clamped between the upper side of the leaf spring and U-shaped bolts or other fastening means which are used to secure the axle to the leaf spring. The bracket may be a right-angled bracket having a foot portion adapted to be clamped between the upper side of the leaf spring and the U-shaped bolts, and an upstanding arm having a hole therein through which a bolt passes, the bolt being engageable with an anchoring insert screwed into the axially extending passage in the coil spring.

### BRIEF DESCRIPTION OF THE DRAWINGS

- **Figure 1**: shows a pictorial view of an adjustable coil spring assembly according to a comparative example;
- **Figure 2**: shows an exploded view of the coil spring assembly of Figure 1;
- **Figure 3**: shows an exploded view of the spring and inserts of Figure 2;
- **Figure 4**: shows a cross sectional view on the line 4-4 of Figure 2, showing the inserts accommodated within the spring;
- **Figure 5**: shows We adjustable coil spring assembly of Figures 1 and 2 installed on the leaf spring of a vehicle;
- **Figure 6**: shows a perspective view of a coil spring assembly according to an embodiment of the invention fitted to a motor vehicle;
- **Figure 7**: shows a side view of the assembly shown in Figure 6;
- **Figure 8**: shows an exploded view of the mounting bracket for the assembly shown in Figure 6;
- **Figure 9**: shows a perspective view of a second embodiment of the invention; and
- **Figure 10**: shows a perspective view of the mounting bracket for the assembly shown in Figure 9.

### DESCRIPTION OF PREFERRED EMBODIMENTS

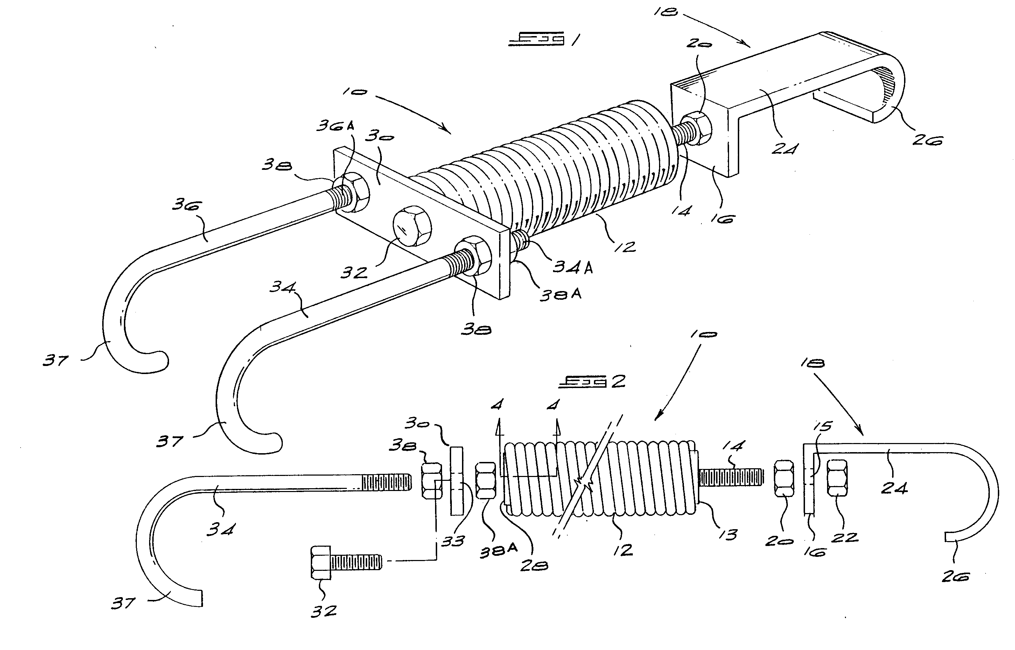

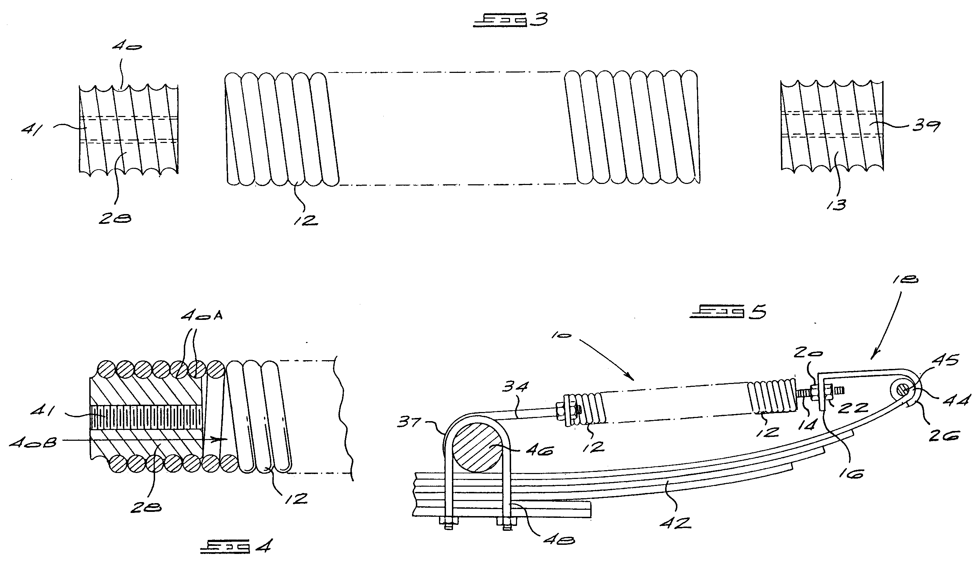

Figures 1 and 2 show a vehicle supplementary spring assembly or adjustable coil spring assembly 10 for a leaf spring having a tension coil spring 12 which is round cylindrical in shape. At one end of the spring 12, a connector rod 14 is anchored to the spring 12 by a first anchoring insert 13 screwed into the spring 12. The rod 14 is threaded along its entire length and passes through a hole 15 which is defined in a flange 16 of a bracket or hook 18. The rod 14 is secured in the hole 15 by locking nuts 20 and 22 which are threaded onto the rod 14 on opposite sides of the flange 16. The bracket 18 includes a strip 24 extending at right angles from the flange 16 and terminating in a hook 26.

At the other end of the spring 12, a second insert 28 is screwed into the spring 12. A rectangular plate 30 is secured to the insert 28 by a connection bolt 32, which passes through a hole 33 formed in the centre of the plate 30 and is screwed into the insert 28. Two end holes (not visible), sized to accommodate the arms 34 and 36, are formed at opposing ends of the plate 30. The arms 34 and 36 are formed from cylindrical rods which are threaded at one end (34A,36A), and bent at the other end to form hooks 37. The threaded ends of the arms 34 and 36 are inserted through the end holes, and the arms 34 and 36 are secured in this position by locking nuts 38 and 38A which are located on the arms 34 and 36 on opposite sides of the plate 30.

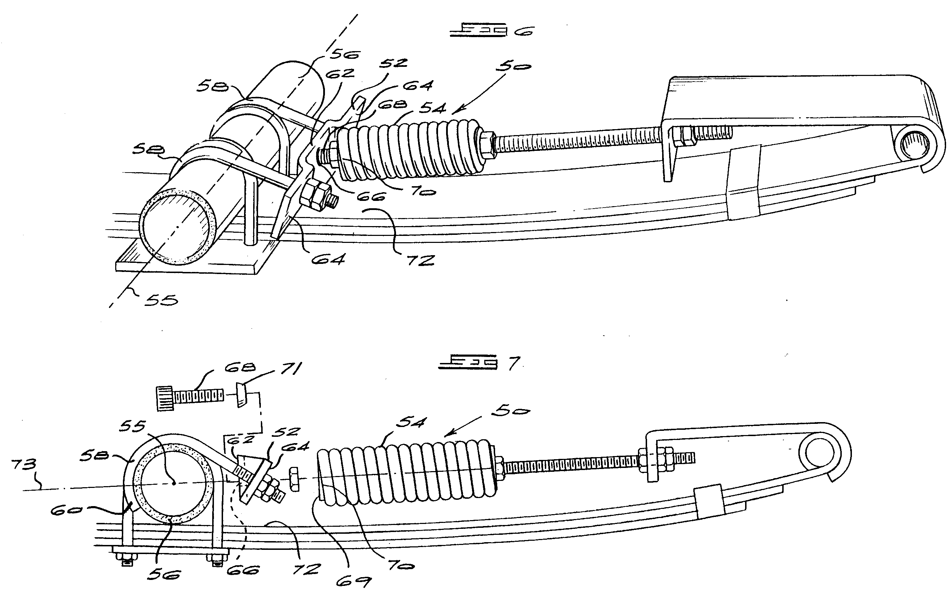

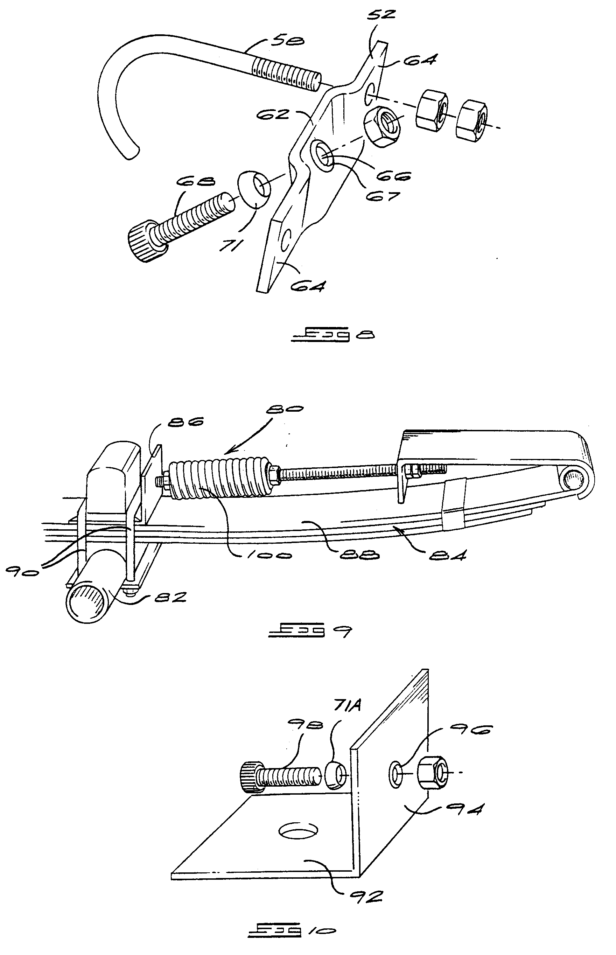

Turning now to Figures 3 and 4, the inserts 13 and 28 have a helical groove forming a threaded outer surface 40 which allows the inserts 13 and 28 to be screwed into the complemental helical inner surface 40A of an axially extending passage 40B defined by the coils of the elongate spring 12. The inserts 13 and 28 are formed with threaded axial bores 39 and 41 sized to receive the respective threaded ends of the connector bolt 32 and the connector rod 14.

The adjustable coil spring assembly 10 is mounted in place on the leaf spring 42 of a motor vehicle as is shown in Figure 5. The hook 26 engages an eye 44 of the leaf spring 42. The eye 44 carries a pin 45 which pivotably connects the leaf spring 42 to the chassis of the motor vehicle. At the other end of the coil spring assembly 10, the arms 34 and 36 are secured to the axle 46 of the vehicle by the hooks 37. The leaf spring 42 is secured to the axle 46 by a pair of U-bolts (only one of which is shown at 48) and a plate arrangement The U-bolts are mounted on either side of the leaf spring 42, and the hooks 37 engage the axle 46 on that portion of the axle 46 between the U-bolts.

Installation of the adjustable coil spring assembly 10 involves jacking up the vehicle to which the assembly is to be installed, so that the leaf spring 42 is unloaded, and extending the assembly 10 in one or more of the following three ways.

Firstly, it will be understood that the overall length of the assembly 10 can be adjusted by loosening the nuts 20 and 22 that secure the connector rod 14 to the flange 16 of the bracket 18, whereafter the bracket 18 can be moved axially along the connector rod 14 towards or away from the spring 12. The nuts 38 and 38A may also be loosened and adjusted so as to reposition the plate relative to the arms 34 and 36.

Secondly, it is possible to screw the connector rod 14 through the threaded axial bore 39 in the insert 13 to vary the extent to which the rod 14 protrudes from the insert 13 within the spring 12. The effective length of the rod 14, and the overall length of the assembly 10, is varied in this manner.

Thirdly, the insert 13 itself can be rotated within the passage defined by the spring 12, and thus axially moved within the passage. When in place within the spring 12, the insert 13 engages a number of the coils of the spring 12, and prevents these coils from elongating as the spring 12 is placed under tension. The coils of the spring 12 extending from behind the insert 13 towards the bracket 18 are naturally ineffective when the spring 12 is tensioned. Therefore, by screwing the insert 13 into the passage delined by the spring 12, and then rotating the insert 13 until it assumes a specified position within this passage, it is possible to adjust the overall length of the assembly 10, and also to adjust the tension in the spring by altering the number of coils of the spring 12 that will be placed under tension. The spring 12 may also be rotated relative to the insert 28.

Once the assembly 10 has been extended by the required length which is determined by the spacing between the axle 46 and the eye 44 of the leaf spring 42, the hook 26 is connected to the eye 42, and the hooks 37 to the axle 46. The nuts 20 and 22 can then be rotated on the connector rod 14 until the spring 12 is placed under the required tension. The positions of the nuts 20 and 22 can then be adjusted from time to time to adjust the tension of the spring 12 if necessary.

The fact that both the overall length and tension of the assembly 10 can be adjusted in three ways allows the assembly 10 to have a greater versatility than was previously possible. A standard assembly 10 is therefore able to be fitted to a far more diverse range of motor vehicles than previous dedicated assemblies, and this obviates the need to manufacture a range of coil spring assemblies to fit different motor vehicles.

Turning now to Figures 6 to 8 of the drawings, a first embodiment of the invention is shown, What is different in this embodiment is the configuration of a bracket 52 by means of which the coil spring 54 is connected to the axle 56. This arrangement is similar to that previously described wherein the assembly 50 has arms 58 with hooked ends 60 thereon which pass around the axle 56. The bracket 52, however, is not a flat planar member as previously described. The bracket 52 has a central region 62 and a pair of outer regions 64. The central region 62 has a hole 66 passing therethrough and a bolt 68 passes through that hole and into an anchoring insert 69 which is screwed into the coil spring 54. The hole 66 is of a larger diameter than the bolt 68 in order that the bolt is able to move angularly relative to the bracket 52. This will be described in more detail herebelow.

The central region 62 of the bracket 52 is angularly offset from the outer regions 64. The angle of inclination is between 5° and 20° and the effect that in the assembled condition the adjustable coil spring assembly adopts a cranked configuration as shown clearly in Figure 7 of the drawings. The angle between the central region 62 and the outer regions 64 may alter for different vehicle suspension configurations. The angle between the central region 62 and outer region 64 is selected so that the end 70 of the coil spring is located nearer to the upper side of the leaf spring 72 than would be the case if the bracket 52 was made from flat plate. The arrangement is such that the axis 73 of the coil spring is perpendicular to and intersects with the axis 55 of the axle 56 and will remain substantially in this orientation as the axle moves up and down in use.

The hole 66 in the central region 62 is preferably machined to the form of a concave recess or has a concave shaped bush 67 fitted thereto which will allow the bolt 68 to move in an articulated manner during movement up and down of the axle of the vehicle. To assist in this movement the bolt 68 has a convex shaped cup washer 71 fitted thereto which will locate in the convex shaped hole in such a manner that the bolt 68 will be able to move in an articulated manner as previously described. This will ensure that at all times the coil spring is caused to extend and retract in a straight line and no lateral bending of the coil spring will take place due to a bending moment being placed on the coil spring.

Turning now to Figures 9 and 10 of the drawings, an arrangement of adjustable coil spring assembly is shown suitable for use on vehicles, such as certain models of 4 X 4 vehicles, wherein the axle 82 is located below the coil spring assembly 84. In this arrangement a bracket 86 which is shown more clearly in Figure 10 of the drawings is clamped between the upper side 88 of the coil spring assembly 44 and the U-bolts 90 which in use hold the axle 82 to the leaf spring assembly 84. The bracket 86 comprises a foot portion 92 which is clamped by the U-bolts 90 and an upstanding arm 94 which is generally perpendicular to the foot portion 92. A hole 96 passes through the upstanding portion 94 and a bolt 98 passes through that hole 96 (in a similar manner to that previously described) in order to connect the coil spring 100. The bolt 98 is also able to move relative to the arm 94 in an articulated manner via a male cup washer 71A.

Various alterations and additions may be made to the embodiments described herein without departing from the scope of the invention. In particular, the brackets 52 and 86 may adopt different forms from that described herein, particularly if different connection arrangements are adopted for different vehicle or axle configurations.

## Claims

1. A vehicle supplementary spring assembly (10) adapted to supplement the spring force provided by a leaf spring (42) of the vehicle, said supplementary spring assembly comprising:
an elongate coil spring (12;54);
a first anchoring insert (13) fitted to one end of the coil spring (12;54);
a second anchoring insert (28;69) fitted to the other end of the coil spring;
a first connector member (18) connected to the first anchoring insert (13;54) and adapted to connect the supplementary spring assembly to a first reaction point (44) on a vehicle at one end of the leaf spring (42); and
a second connector member (32,34,36,37,38,38A; 52,58,60) connected to the other end of the coil spring and adapted to connect the supplementary spring assembly to a second reaction point (46;86) on the vehicle in the region of an axle (46;56) of the vehicle between the opposed ends of the leaf spring;
adjustment means (14,20,22) for adjusting the overall length of the supplementary spring assembly so as to allow for variations in spacing between the first and second reaction points (44;46;86) when the spring assembly is fitted to different vehicles, said first and second reaction points being selected in use such that a tensile force applied between the reaction points supplements the action of the leaf spring in supporting the vehicle characterized in that:
the elongate coil spring (12;54) is open-ended and forms an axially extending round cylindrical passage (40B) having a wall of helical configuration defined by the inner surface (40A) of the coils of the coil spring;
the first and second anchoring inserts (13;28) have outer surfaces with complemental helical thread-like formations (40) thereon dimensioned to be in threaded engagement with the helical wall of the passage (40B) and adapted to be screwed into opposite ends of the coil spring (12;54), said tensile force being selectively variable by varying the position of at least one of the anchoring inserts (13;28) along the length of the passage (40B);
the second anchoring insert (28;69) is connected to the second connector member (52,58,60) via an articulated connection (66,67,68,69;71A,96,98) for ensuring that the coil spring extends and retracts so as to apply the tensile force in a straight line coincident with the central axis (73) of the coil spring.

2. A spring assembly according to claim 1 characterized in that the first anchoring insert (13) is provided with a threaded axial bore (39) extending completely through the insert, and the first connector member (18) includes a complementally threaded shank (14) adapted to screw into said axial bore, the first connector member being adapted to be screwed through the threaded axial bore (39) so as to provide means for further adjustment in the overall length and tensile force of the supplementary spring assembly.

3. A spring assembly according to claim 2 characterized in that the second anchoring insert (28;69) is provided with a threaded axial bore (41) extending completely through, the insert and the second connector member (32,34,36,37,38,38A;52,58,60) includes a threaded shank (34A,36A) adapted to be screwed through the threaded axial bore (41) so as to provide means for still further adjustment in the overall length and tensile force of the supplementary spring assembly.

4. A spring assembly according to any one of the preceding claims characterized in that said second connector member (32,34,36,37,38,38A) is adapted to connect the spring assembly to an axle (56) of a vehicle and said second connector member is configured to align the coil spring (12) so that its longitudinal axis (73) is perpendicular to and passes through the axis (55) of the axle (56) regardless of the degree of flexure of the leaf spring (42).

5. A spring assembly according to claim 4 characterized in that the second connecter includes a bracket (52) of elongate form adapted to be aligned generally transverse to the axis (73) of the coil spring, said bracket having a central region (62) which in use is perpendicular to the axis (73) of the coil spring, and two outer regions (64) which are co-planar with each other and angled relative to the central region.

6. A spring assembly according to claim 5 characterized in that the coil spring (54) is connected to the central region (62) of the bracket by a bolt (68) which passes through a hole (66) formed in said central region, and screws into an anchoring insert (69) located within the passage of the coil spring, the angle of inclination between the central region (62) and outer regions (64) of the bracket being selected such that, in the assembled condition, the spring assembly adopts a cranked configuration with the end (70) of the coil spring (54) adjacent to the axle being inclined towards the leaf spring (72) as a consequence of said angular relationship between the central region and outer regions of the bracket.

7. A spring assembly according to claim 6 characterized in that the bracket (52) comprises a forged plate with a concave recess or bush (67) formed around said hole (66) passing through the central region, said bolt having a cup bearing (71) fitted thereto which locates within the concave recess or bush (67) so as to define the articulated connection (66,67,68,69).

8. A spring assembly according to any one of the preceding claims 1 to 3 characterised in that an axle (82) of the vehicle is located below the leaf spring (42), in that the second reaction member is a bracket (86) mounted atop the leaf spring directly above the axle by means of the same U-bolts (90) used to mount the leaf spring (84) in position above the axle (82), and in that the articulated connection (71A,96,98) connects the bracket (86) to the second anchoring insert (69).

## Patentansprüche

1. Eine Fahrzeug-Zusatzfederbaugruppe (10), die so ausgelegt ist, daß sie die von einer Blattfeder (42) des Fahrzeugs vorgesehene Federkraft unterstützt, wobei die Zusatzfederbaugruppe beinhaltet:
Eine längliche Schraubenfeder (12; 54);
einen ersten Verankerungseinsatz (13), der in ein Ende der Schraubenfeder (12; 54) eingesetzt ist;
einen zweiten Verankerungseinsatz (28; 69), der in das andere Ende der Schraubenfeder eingesetzt ist;
ein erstes Verbindungsglied (18), das mit dem ersten Verankerungseinsatz (13;54) verbunden ist und so ausgelegt ist, daß es die Zusatzfederbaugruppe mit einem ersten Reaktionspunkt (44) an einem Fahrzeug an einem Ende der Blattfeder (42) verbindet; und
ein zweites Verbindungsglied (32, 34, 36, 37, 38, 38A; 52, 58, 60), das mit dem anderen Ende der Schraubenfeder verbunden ist und so ausgelegt ist, daß es die Zusatzfederbaugruppe mit einem zweiten Reaktionspunkt (46; 86) am Fahrzeug im Bereich einer Fahrzeugachse (46; 56) zwischen den einander gegenüberliegenden Enden der Blattfeder verbindet;
Einstellmittel (14, 20, 22) zum Einstellen der Gesamtlänge der Zusatzfederbaugruppe, um Veränderungen im Abstand zwischen dem ersten und dem zweiten Reaktionspunkt (44; 46; 86) zu berücksichtigen, wenn die Federbaugruppe an unterschiedlichen Fahrzeugen angebracht wird, wobei der erste und der zweite Reaktionspunkt im Gebrauch so gewählt wird, daß eine zwischen den Reaktionspunkten angelegte Zugkraft die Wirkung der Blattfeder beim Tragen des Fahrzeugs unterstützt, und ist dadurch gekennzeichnet, daß
die langgestreckte Schraubenfeder (12; 54) offenendig ist und einen sich axial erstreckenden, runden, zylindrischen Durchgang (40B) bildet, der eine Wand mit schraubenförmiger Konfiguration aufweist, definiert durch die Innenfläche (40A) der Schraubengänge der Schraubenfeder;
der erste und der zweite Verankerungseinsatz (13; 28) erste Flächen mit darauf ausgebildeten komplementären schraubengangförmigen Ausbildungen (40) aufweist, die so bemaßt sind, daß sie in Gewindeeingriff mit der schraubenförmigen Wand des Durchgangs (40B) stehen und so ausgelegt sind, daß sie in einander gegenüberliegende Enden der Schraubenfeder (12, 54) geschraubt werden können, wobei die Zugkräfte wahlweise veränderbar sind durch Verändern der Position wenigstens eines der Verankerungseinsätze (13; 28) entlang der Länge des Durchgangs (40B);
der zweite Verankerungseinsatz (28; 69) mit dem zweiten Verbindungsglied (52, 58, 60) über eine gegliederte Verbindung (66, 67, 68, 69; 71A, 96, 98) verbunden ist, um sicherzustellen, daß sich die Schraubenfeder ausdehnt und zusammenzieht, um die Zugkraft in gerader Linie, zusammenfallend mit der Mittelachse (73) der Schraubenfeder, aufzubringen.

2. Eine Federbaugruppe gemäß Anspruch 1, dadurch gekennzeichnet, daß der erste Verankerungseinsatz (13) vorgesehen ist mit einer axialen Gewindebohrung (39), die sich ganz durch den Einsatz hindurch erstreckt, und das erste Verbindungsglied (18) einen komplementären Gewindeschaft (14) aufweist, der so ausgelegt ist, daß er in die axiale Bohrung geschraubt werden kann, wobei das erste Verbindungsglied so ausgelegt ist, daß es durch die axiale Gewindebohrung (39) geschraubt werden kann, so daß es ein Mittel zur weiteren Einstellung der Gesamtlänge und Zugkraft der zusätzlichen Federbaugruppe bildet.

3. Eine Federbaugruppe gemäß Anspruch 2, dadurch gekennzeichnet, daß der zweite Verankerungseinsatz (28; 69) mit einer axialen Gewindebohrung (41) versehen ist, die sich ganz durch den Einsatz hindurch erstreckt, und das zweite Verbindungsglied (32, 34, 36, 37, 38, 38A; 52, 58, 60) einen Gewindeschaft (34A, 36A) aufweist, der so ausgelegt ist, daß er in die axiale Bohrung (41) geschraubt werden kann, so daß das ein Mittel zur weiteren Einstellung der Gesamtlänge und Zugkraft der zusätzlichen Federbaugruppe bildet.

4. Eine Federbaugruppe gemäß einem beliebigen der vorstehenden Ansprüche, dadurch gekennzeichnet, daß das zweite Anschlußglied (32, 34, 36, 37, 38, 38A) so ausgelegt ist, daß es die Federbaugruppe an eine Achse (56) eines Fahrzeugs anschließt, und das zweite Anschlußglied so konfiguriert ist, daß es die Schraubenfeder (12) so ausrichtet, daß ihre Längsachse (73) senkrecht auf der Achse (55) der Fahrzeugachse (56) steht und durch diese hindurch geht, unabhängig vom Grad der Biegung der Blattfeder (42).

5. Eine Federbaugruppe gemäß Anspruch 4, dadurch gekennzeichnet, daß der zweite Verbinder eine Klammer (52) länglicher Form beinhaltet, die so ausgelegt ist, daß sie im allgemeinen quer zur Achse (73) der Schraubenfeder ausgerichtet ist, wobei die Klammer einen Zentralbereich (62), der im Gebrauch senkrecht auf der Achse (73) der Schraubenfeder steht, und zwei andere Bereiche (64), die koplanar zueinander sind und winklig gegenüber dem Zentralbereich ausgerichtet sind, aufweist.

6. Eine Federbaugruppe gemäß Anspruch 5, dadurch gekennzeichnet, daß die Schraubenfeder (54) an den Zentralbereich (62) der Klammer durch eine Schraube (68), die durch ein Loch (66) geht, das im Zentralbereich ausgebildet ist, und Schrauben in einen Verankerungseinsatz (69) innerhalb des Durchgangs der Schraubenfeder angeschlossen ist, wobei der Neigungswinkel zwischen dem Zentralbereich (62) und den Außenbereichen (64) der Klammer so gewählt wird, daß im zusammengebauten Zustand die Federbaugruppe mit dem Ende (79) der Schraubenfeder (54) an der Achse eine gekröpfte Konfiguration annimmt, die zur Blattfeder (72) zu geneigt ist, als Folge der Winkelbeziehung zwischen dem Zentralbereich und den Außenbereichen der Klammer.

7. Eine Federbaugruppe gemäß Anspruch 6, dadurch gekennzeichnet, daß die Klammer (52) eine geschmiedete Platte mit einer um das Loch (66) ausgebildeten konkaven Schrägung bzw. Buchse (67), die durch den Zentralbereich geht, umfaßt, wobei die Schraube ein eingepaßtes Napflager (71) aufweist, das innerhalb der konkaven Schrägung oder Buchse (67) zu liegen kommt, um die gegliederte Verbindung (66, 67, 68, 69) zu definieren.

8. Eine Federbaugruppe gemäß einem der vorstehenden Ansprüche 1 bis 3, dadurch gekennzeichnet, daR eine Achse (82) des Fahrzeugs unter der Blattfeder (42) gelegen ist, in dem das zweite Reaktionsglied eine Klammer (86) ist, die oben auf der Blattfeder direkt über der Achse mittels der gleichen U-Bolzen (90) montiert ist, die auch die Blattfeder (84) in ihrer Position über der Achse (82) halten, und in dem die gegliederte Verbindung (71A, 96, 98) die Klammer (86) mit dem zweiten Verankerungseinsatz (69) verbinden.

## Revendications

1. Ensemble (10) à ressort supplémentaire pour véhicule, destiné à compléter la force élastique donnée par un ressort à lames (42) du véhicule, l'ensemble à ressort supplémentaire comprenant :
un ressort hélicoïdal allongé (12 ; 54),
un premier élément rapporté d'ancrage (13) monté sur une première extrémité du ressort hélicoïdal (12 ; 54),
un second élément rapporté d'ancrage (28 ; 69) monté à l'autre extrémité du ressort hélicoïdal,
un premier organe de raccordement (18) raccordé au premier élément rapporté d'ancrage (13 ; 54) et destiné à raccorder l'ensemble à ressort supplémentaire à un premier point de réaction (44) sur le véhicule à une première extrémité du ressort à lames (42),
un second organe de raccordement (32, 34, 36, 37, 38, 38A ; 52, 58, 60) raccordé à l'autre extrémité du ressort hélicoïdal et destiné à raccorder l'ensemble à ressort supplémentaire à un second point de réaction (46 ; 86) sur le véhicule dans la région de l'essieu (46 ; 56) du véhicule entre les extrémités opposées du ressort à lames, et
un dispositif (14, 20, 22) d'ajustement de la longueur globale de l'ensemble à ressort supplémentaire afin que des variations d'espacement entre le premier et le second point de réaction (44 ; 46 ; 86) soient possibles lorsque l'ensemble à ressort est monté sur des véhicules différents, le premier et le second point de réaction étant choisis pendant l'utilisation afin qu'une force de traction appliquée entre les points de réaction s'ajoute à l'action du ressort à lames pour le support du véhicule, caractérisé en ce que :
le ressort hélicoidal allongé (12 ; 54) a une extrémité ouverte et forme un passage axial cylindrique (40B) de section circulaire ayant une paroi de configuration hélicoïdale délimitée par la surface interne (40A) des spires du ressort hélicoïdal,
le premier et le second élément rapporté d'ancrage (13 ; 28) ont des surfaces externes possédant des organes conformés (40) en forme d'hélice complémentaire dont les dimensions permettent la coopération par vissage avec la paroi hélicoïdale du passage (40B) et destinées à être vissées aux extrémités opposées du ressort hélicoïdal (12 ; 54), la force de traction étant variable sélectivement par variation de la position d'au moins l'un des éléments rapportés d'ancrage (13 ; 28) sur la longueur du passage (40B), et
le second élément rapporté d'ancrage (28 ; 69) est raccordé au second organe de raccordement (52, 58, 60) par un raccord articulé (66, 67, 68, 69 ; 71A, 96, 98) afin que le ressort hélicoïdal s'allonge et se rétracte demanière à appliquer la force de traction suivant une droite qui coïncide avec l'axe central (73) du ressort hélicoïdal.

2. Ensemble à ressort selon la revendication 1, caractérisé en ce que le premier élément rapporté d'ancrage (13) a un trou axial taraudé (39) qui s'étend complètement à travers l'élément rapporté, et le premier organe de raccordement (18) comprend une tige filetée complémentaire (14) destinée à se visser dans le trou axial, le premier organe de raccordement étant destiné à être vissé dans le trou axial taraudé (39) afin qu'il forme un dispositif d'ajustement supplémentaire de la longueur totale et de la force de traction de l'ensemble à ressort supplémentaire.

3. Ensemble à ressort selon la revendication 2, caractérisé en ce que le second élément rapporté d'ancrage (28 ; 69) a un trou axial taraudé (41) qui s'étend complètement dans l'élément rapporté, et le second organe de raccordement (32, 34, 36, 37, 38, 38A ; 52, 58, 60) comprend une tige filetée (34A, 36A) destinée à être vissée dans le trou axial taraudé (41) afin qu'elle constitue des moyens d'ajustement supplémentaires de la longueur totale et de la force de traction de l'ensemble à ressort supplémentaire.

4. Ensemble à ressort selon l'une quelconque des revendications précédentes, caractérisé en ce que le second organe de raccordement (32, 34, 36, 37, 38, 38A) est destiné à raccorder l'ensemble à ressort à un essieu (56) d'un véhicule et le second organe de raccordement a une configuration telle qu'il s'aligne sur le ressort hélicoïdal (12) si bien que son axe longitudinal (73) est perpendiculaire à l'axe (55) de l'essieu (56) et passe par cet axe indépendamment du degré de flexion du ressort à lames (42).

5. Ensemble à ressort selon la revendication 4, caractérisé en ce que le second organe de raccordement comprend un support (52) de forme allongée destiné à être aligné en direction générale transversale à l'axe (73) du ressort hélicoïdal, le support ayant une région centrale (62) qui, pendant l'utilisation, est perpendiculaire à l'axe (73) du ressort hélicoïdal, et deux régions externes (64) qui sont coplanaires mutuellement et qui sont inclinées par rapport à la région centrale.

6. Ensemble à ressort selon la revendication 5, caractérisé en ce que le ressort hélicoidal (54) est raccordé à la région centrale (62) du support par un boulon (68) qui passe par un trou (66) formé dans la région centrale, et se visse dans un élément rapporté d'ancrage (69) placé dans le passage du ressort hélicoïdal, l'angle d'inclinaison de la région centrale (62) et des régions externes (64) du support étant choisi afin que, à l'état assemblé, l'ensemble à ressort adopte une configuration coudée telle que l'extrémité (70) du ressort hélicoïdal (54) adjacente à l'essieu est inclinée vers le ressort à lames (72) du fait de la relation angulaire entre la région centrale et les régions externes du support.

7. Ensemble à ressort selon la revendication 6, caractérisé en ce que le support (52) comprend une plaque forgée ayant un manchon ou une cavité concave (67) formé autour du trou (66) passant dans la région centrale, le boulen ayant un élément d'appui en forme de coupelle (71) monté afin qu'il se positionne dans le manchon ou la cavité concave (67) et délimite le raccord articulé (66, 67, 68, 69).

8. Ensemble à ressort selon l'une quelconque des revendications 1 à 3, caractérisé en ce qu'un essieu (82) du véhicule est placé sous le ressort à lames (42), en ce que le second organe de réaction est un support (86) monté sur le ressort à lames directement au-dessus de l'essieu à l'aide des mêmes boulons en U (90) utilisés pour le montage du ressort à lames (84) en position au-dessus de l'essieu (82), et en ce que le raccordement articulé (71A, 96, 98) raccorde le support (86) au second élément rapporté d'ancrage (69).
